(19) Europäisches Patentamt
European Patent Office
Office européen des brevets

(11) Veröffentlichungsnummer: **0 131 126**
**B1**

(12) # EUROPÄISCHE PATENTSCHRIFT

(45) Veröffentlichungstag der Patentschrift: **19.08.87**

(21) Anmeldenummer: **84106021.3**

(22) Anmeldetag: **26.05.84**

(51) Int. Cl.⁴: **C 09 D 5/44**, C 09 D 3/58, C 09 D 17/00

(54) **Selbstvernetzendes, hitzehärtbares Reibharz.**

(30) Priorität: **24.06.83 DE 3322781**

(43) Veröffentlichungstag der Anmeldung: **16.01.85 Patentblatt 85/03**

(45) Bekanntmachung des Hinweises auf die Patenterteilung: **19.08.87 Patentblatt 87/34**

(84) Benannte Vertragsstaaten: **AT BE CH DE FR GB IT LI NL SE**

(56) Entgegenhaltungen:
**EP-A- 0 025 555**
**EP-A- 0 081 266**
**US-A- 3 936 405**

(73) Patentinhaber: **BASF Lacke + Farben Aktiengesellschaft**
**Max-Winkelmann-Strasse 80**
**D-4400 Münster (DE)**

(72) Erfinder: **Geist, Michael, Dr. Dipl.-Chem.**
**Rubensstrasse 251**
**D-4400 Münster (DE)**
Erfinder: **Ott, Günther, Dr. Dipl.-Chem.**
**von Holte Strasse 101 a**
**D-4400 Münster-Wolbeck (DE)**

(74) Vertreter: **Habbel, Hans-Georg, Dipl.-Ing.**
**Postfach 3429 Am Kanonengraben 11**
**D-4400 Münster (DE)**

**EP 0 131 126 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein selbstvernetzendes, hitzehärtbares Bindemittel insbesondere für Elektrotauchlacke auf der Basis eines organischen Kunstharzes, das primäre und/oder sekundäre Hydroxylgruppen, veresterte Carboxylgruppen und gegebenenfalls Aminogruppen enthält.

In der US-PS 3 936 405 und der US-PS 3 962 165 sind Epoxidharz-Aminsalz-Addukte beschrieben, die als Reibharze eingesetzt werden können. Der Nachteil dieser Harze ist jedoch, daß sie nicht in der Lage sind, einen Fremdvernetzer zu tragen und daß sie nicht selbstvernetzend aufgebaut sind.

Andererseits sind in der DE-OS 2 936 411 selbstvernetzende Bindemittel beschrieben, die Aminogruppen und veresterte Carboxylgruppen enthalten. Diese Bindemittel sind jedoch als Reibharze nicht optimal geeignet.

Es ist Aufgabe der vorliegenden Erfindung, ein selbstvernetzendes Bindemittel insbesondere für Elektrotauchlacke zu schaffen, das eine sehr gute Pigmentbenetzung aufweist und damit als gutes Reibharz dienen kann.

Diese Aufgabe wird bei einem Bindemittel der eingangs genannten Art erfindungsgemäß dadurch gelöst, daß das Kunstharz 0,8 bis 2,0 quartäre Ammoniumgruppen pro Molekül enthält und die veresterten Carboxylgruppen in der Alkoholkomponente durch einen Substituenten aktiviert sind, der einen negativen induktiven Effekt bewirkt.

Diese Aktivierung wird vorteilhaft dadurch erreicht, daß die veresterten Carboxylgruppen β-Hydroxyalkylestergruppen sind.

In einer weiteren vorteilhaften Ausgestaltung der Erfindung sind die veresterten Carboxylgruppen β-Alkoxyalkylestergruppen. Hierdurch wird ebenfalls eine wirksame Aktivierung erreicht.

Die erfindungsgemäßen Bindemittel bieten folgende Vorteile : Die verwendeten Alkoholkomponenten, d. h. im Falle der β-Hydroxyalkylester die 1,2-Diole und im Falle der β-Alkoxyalkylester die 1,2-Diolmonoether eine effektive Aktivierung der Carboxylestergruppen erreicht wird. Dies wiederum führt zu einer wirksamen Vernetzung im endgültig resultierenden Film. In dieser Hinsicht sind die erfindungsgemäß eingesetzten Alkoholkomponenten den Monoalkoholen überlegen. Wenn zur Veresterung der Carboxylgruppen Monoalkohole wie Methyl-, Ethyl-, oder Butylalkohol eingesetzt werden, läuft die Vernetzungsreaktion der Bindemittel nicht in ausreichendem Maße oder zu langsam ab. Die Vernetzungsrate ist in diesem Fall geringer, und der eingebrannte Überzug ist gegenüber Lösungsmitteln nicht ausreichend beständig. Weiterhin können die erfindungsgemäßen in der Alkoholkomponente aktivierten Carboxylestergruppen günstiger hergestellt werden als die Monoalkohole enthaltenen Estergruppen. So können die β-Hydroxyalkylestergruppen durch Umsetzung einer Carboxylgruppe mit einer Epoxidverbindung erhalten werden. Es handelt sich um Reaktionen, die unter milden Bedingungen durchgeführt werden können. Hierdurch werden Nebenreaktionen, wie beispielsweise Umesterungen, vermieden, und es entsteht ein einheitlicheres Produkt. Ein weiterer Vorteil der erfindungsgemäßen Bindemittel liegt darin, daß die beim Einbrennen freigesetzten Verbindungen, besonders gute Verlaufmittel sind, durch die Überzüge mit einer sehr guten Oberfläche erzielt werden. So ist beispielsweise Ethylglykol als solches bereits als Verlaufmittel bekannt, und durch die Erfindung wird es möglich gemacht, diese Verbindung beim Einbrennen freizusetzen, wodurch ein besonders guter Effekt erzielt wird. Im Gegensatz dazu besteht bei der Freisetzung niedrigsiedender Alkohole die Gefahr von sogenannten Kochern und anderen Filmstörungen im Überzug.

Das erfindungsgemäße Kunstharz wird besonders bevorzugt als Reibharz für kathodisch abscheidbare Elektrotauchlacke verwendet.

Während des Einbrennens reagieren nun die aktivierten Estergruppen mit den Hydroxylgruppen und den gegebenenfalls vorhandenen Aminogruppen des Reibharzes unter Ausbildung von Ester- bzw. Amidbindungen. Der aktivierte Esteralkohol wird hierbei abgespalten. Der Vernetzungsmechanismus kann durch folgende Reaktionsgleichungen erläutert werden

a) Vernetzung durch Reaktion der Hydroxylgruppe mit der β-Hydroxyalkylestergruppe

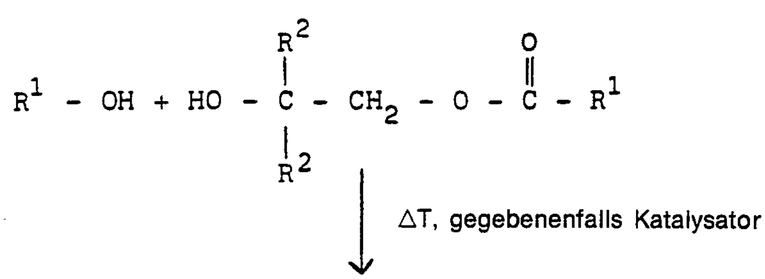

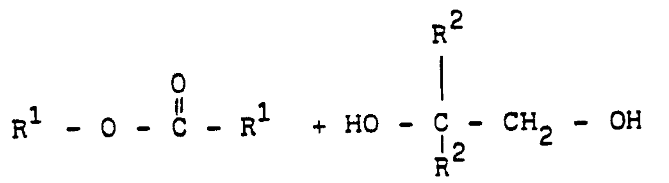

$R^1$ = Bindemittel, $R^2$ = H, org. Rest

b) Vernetzung durch Reaktion der Hydroxylgruppe mit der β-Alkoxyalkylestergruppe

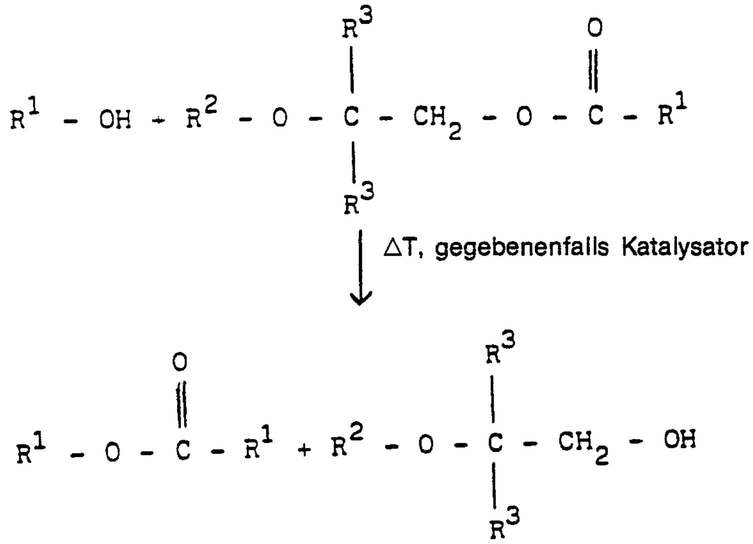


$R^1$ = Bindemittel
$R^2$ = Alkyl, subst. Alkyl
$R^3$ = H, org. Rest

Die abgespaltenen Diole bzw. Diolmonoether weisen vorzugsweise einen Siedepunkt auf, der in der Nähe der Einbrenntemperatur liegt, so daß sie während des Einbrennvorganges als besonders wirksame Verlaufsmittel wirken. Die während des Einbrennens entstehende Esterbindung wirkt sich sehr vorteilhaft auf die Haftung des Films, insbesondere auf Metallsubstraten, aus. Ebenfalls wird hierdurch die Elastizität des Filmes gesteigert. Dieser Vernetzungsmechanismus bedingt eine hohe Beständigkeit des Lackfilms gegenüber Lösungsmittel.

Vorteilhaft enthält das Kunstharz 2 bis 10 primäre und/oder sekundäre Hydroxylgruppen und 1 bis 5 aktivierte Estergruppen pro 1 000 Molekulargewichtseinheiten.

Das Äquivalentverhältnis zwischen den primären und/oder sekundären Hydroxylgruppen und den aktivierten Carboxylestergruppen beträgt vorteilhaft 4 : 1 bis 1 : 2, wobei ein Äquivalenzverhältnis von etwa 2 : 1 besonders bevorzugt wird.

Die Vernetzungsreaktion kann durch geeignete Katalysatoren noch beschleunigt werden. Hierzu sind insbesondere geeignet Ammoniumverbindungen wie Trimethylcetylammoniumbromid und organische Zinnverbindungen wie Dibutylzinnlaurat und Eisen-III-acetylacetonat, Zinkacetat, Zink-2-ethylnexoat, Kobalthaphthenat, Bleiacetat, Bleioctoat oder Butyltitanat.

Das Bindemittel ist also ein organisches Kunstharz, das primäre und/oder sekundäre Hydroxylgruppen und aktivierte Carboxylestergruppen als reaktive Gruppen enthält. Gegebenenfalls können zusätzlich auch reaktive Aminogruppen neben den zur Solubilisierung dienenden quartären Ammoniumgruppen vorhanden sein. Zur Herstellung der erfindungsgemäßen selbstvernetzenden hitzehärtbaren Bindemittel erweisen sich epoxidgruppenhaltige Harze mit vorzugsweise endständigen Epoxidgruppen aus der Gruppe der Polyglycidylether, Polyglycidylester und der Polyglycidylamine als besonders geeignet. Das Kunstharz ist demnach vorteilhaft hergestellt worden durch Umsetzung eines Polyglycidylesters oder -ethers mit einer Verbindung, die zwei gegenüber Epoxidgruppen reaktive Gruppen und mindestens eine aktivierte Carboxylestergruppen trägt, zu einem Zwischenprodukt mit endständigen Epoxidgruppen und Umsetzung dieser Epoxidgruppen unter Ringöffnung mit einem Amin-Säure-Addukt.

Unter Polyglycidylether im Rahmen dieser Erfindung werden vorzugsweise solche Polyglycidylether der allgemeinen Formel

(Siehe Formel Seite 4 f.)

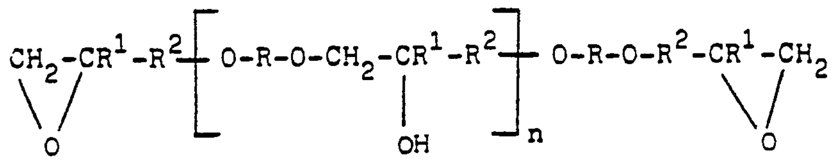

mit

R = 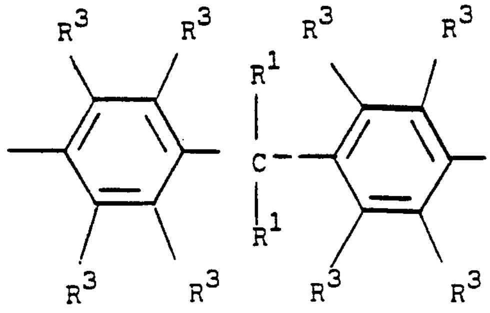

$R^1$ = H oder $C_nH_2n + 1$
$R^2 = (CR_2^1)_n$
$R^3 = R^1$, Halogen und bevorzugt H
n = 0 bis 10
verstanden.

Die Polyglycidylether der aufgeführten allgemeinen Formel haben eine zahlenmittlere Molmasse von etwa 340 bis 5 000 und dementsprechend ein Epoxidäquivalentgewicht von 170 bis 2 500. Die Epoxidharze können auch hydriert oder teilhydriert werden. Zur Steuerung der Filmeigenschaften können ein Teil oder alle der reaktionsfähigen Gruppen des Epoxidharzes mit anderen Verbindungen umgesetzt werden. Hierfür bieten sich an :

a) Carboxylgruppenhaltige Verbindungen wie gesättigte oder ungesättigte Monocarbonsäuren, aliphatische, cycloaliphatische und/oder aromatische Dicarbonsäuren verschiedener Kettenlängen, Hydroxyalkylcarbonsäuren sowie carboxylgruppenhaltige Polyester oder

b) Aminogruppenhaltige Verbindungen wie Diethylamin oder Ethylhexylamin oder Diamine mit sekundären Aminogruppen, Polyaminoamide wie Versamide oder das Umsetzungsprodukt von einem Mol Diaminohexan mit zwei Molen Monogylcidylether oder Monoglycidylester, speziell Glycidylester α-verzweigter Fettsäuren wie der Versaticsäure, oder

c) Hydroxylgruppenhaltige Verbindungen wie Neopentylglykol, bisethoxyliertes Neopentylglykol, Hydroxypivalinsäureneopentylglykolester, Hexandiol-1,6, 1,4-Bis-(hydroxymethyl)-cyclohexan, Trimethylolpropan oder Aminoalkohole wie Triethanolamin, Methyldiethanolamin oder hydroxylgruppenhaltige Alkylketimine wie Aminomethylpropandiol-1,3-methyl-isobutylketimin sowie auch Polyglykolether, Polyesterpolyole, Polyetherpolyole, Polycaprolactonpolyole, verschiedener Funktionalität und Molekulargewichte.

Anstelle der Polyglycidylether auf Basis Bisphenol A können auch Polyglycidylether auf Basis anderer Grundkomponenten wie Triglycidylisocyanurat, heterocyclische Diglycidylverbindungen oder Diglycidylhyantoine eingesetzt werden.

Als Polyglycidylester sind Umsetzungsprodukte von z. B. Terephthalsäurebisglycidylester oder Isophthalsäurebisglycidylester mit z. B. Bisphenol A oder der die aktivierte Estergruppe tragenden Komponente geeignet. Das Epoxidäquivalentgewicht dieser Produkte liegt zwischen 200 bis 2 500. Zur Steuerung der Filmeigenschaften kann ein Teil der verbliebenen, reaktiven Glycidylgruppen mit anderen Verbindungen umgesetzt werden. Hierfür bieten sich die oben unter a, b und c genannten Verbindungen an.

Unter Polyglycidylaminen werden solche glycidylgruppenhaltige Harze verstanden, die man durch Einführung von Glycidylgruppen über z. B. Epichlorhydrin in $NH_2$-funktionelle Harze erhält.

Teilepoxidierte Polybutadiene sind ebenfalls zur Modifizierung mit Aminogruppen enthaltenden Verbindungen und β-Hydroxyalkylestergruppen bzw. β-Alkoxyalkylestergruppen enthaltenden Verbindungen geeignet.

Unter teilepoxidierten Polybutadienölen werden hier Umsetzungsprodukte verstanden, die durch Reaktion von handelsüblichen Polybutadienölen mit Persäuren bzw. organischen Säure-$H_2$-$O_2$-Mischungen erhalten werden. Die Darstellungsmethode wird z. B. in der Chemiker-Zeitung 95, 857f (1971) beschrieben.

Bevorzugt geeignet sind auch Copolymerisate von Acrylsäureester und/oder Methacrylsäureester, die z. B. Acrylsäure und/oder Methacrylsäureglycidylester oder eine andere, eine Glycidylgruppe tragende, olefinisch ungesättigte, polymerisierbare Verbindung sowie β-Hydroxyalkylester der Acryl- und/oder Methacrylsäure bzw. β-Alkoxyalkylacrylat und/oder β-Alkoxyalkylmethacrylat enthalten. Die

Glycidylgruppen werden in einem weiteren Reaktionsschritt mit den Amin-Säure-Addukten modifiziert.

Die Copolymerisate weisen bevorzugt eine zahlenmittlere Molmasse von 700 bis 15 000 auf. Bevorzugte Monomere sind Acryl- und Methacrylsäureester mit 1 bis 8 Kohlenstoffatomen im Alkoholrest. Die Copolymerisate können jedoch auch weitere Monomere wie (Meth)-acrylamid oder Styrol enthalten. Die Copolymerisation erfolgt in wohlbekannter Weise durch Lösungs-, Suspensions- oder Emulsionspolymerisation unter Zusatz von Initiatoren wie Peroxiden, Hydroperoxiden, Perestern oder thermolabilen Azoverbindungen sowie gegebenenfalls von Molekulargewichtsreglern.

Die ionischen Gruppen des Reibharzes, die erforderlich sind, um dem Reibharz einerseits eine Wasserverträglichkeit zu geben und andererseits ein Aufziehen auf das Pigment zu ermöglichen, werden durch ein organisches tertiäres Amin-Säuresalz eingeführt. Diese organischen tertiären Amin-Säuresalze sind in der Lage, unter Öffnung der Epoxidgruppen zu reagieren, wobei sie quartäre ammoniumhaltige Umsetzungsprodukte liefern. Das Amin des Amin-Säureaddukts kann ein aliphatisches, cycloaliphatisches oder araliphatisches Amin sein. Die Säure des Aminsalzes kann eine anorganische Säure sein, bevorzugt sind jedoch die organischen Säuren, wie Essigsäure oder Milchsäure, wobei die Milchsäure am meisten bevorzugt wird.

Bei der Verwendung des Harzes gemäß der Erfindung als Reibharz für die Herstellung einer Pigmentpaste werden die Mengenverhältnisse des epoxyhaltigen organischen Materials und des organischen tertiären Amins, die miteinander umgesetzt werden, bevorzugt so ausgewählt, daß das Trägerharz 0,8 bis 2,0 Stickstoffatome pro Molekül enthält. Geringere Mengen an quaternärem Stickstoff können zu einer schlechten Benetzbarkeit des Pigments führen, wogegen höhere Mengen zur Folge haben, daß die Harze zu wasserlöslich sind.

Über die organischen tertiären Amin-Säureaddukte können gleichzeitig reaktive Gruppen, insbesondere Hydroxylgruppen eingeführt werden. Deshalb werden für die Herstellung tertiäre Alkanolamine bevorzugt. Hierzu gehören zum Beispiel Diethylethanolamin, Methyldiethanolamin, Triethanolamin, Diethylethanolamin, Dibutylethanolamin, Butyldiethanolamin, Dimethylisopropanolamin, Methyldiisopropanolamin, Cyclohexyldiisopropanolamin, Dimethylpropanolamin, Dimethylpentanolamin und 3-Dimethylaminobenzylalkohol.

Das Einführen zusätzlicher Aminogruppen in das organische Harz erfolgt vorzugsweise durch Reaktion eines Polyamins und/oder eines amino- und/oder hydroxylgruppenhaltigen Ketimins mit Harzen, die mindestens eine Epoxidgruppe oder Isocyanatgruppe oder eine andere, geeignete reaktive Gruppe je Molekül enthalten. Ein Bindemittel mit reaktiven Aminogruppen kann aber auch durch andere Anlagerungsreaktionen erhalten werden, z. B. durch Verestern oder Amidieren von primäre und/oder sekundäre Aminogruppen tragende Verbindungen mit hierfür geeignete Gruppen enthaltende Harze.

Zur Einführung der aktivierten Estergruppen in das Bindemittel eignen sich insbesondere Verbindungen mit einer oder mehreren Carbonsäuregruppen neben weiteren reaktiven Gruppen, die den Einbau in das Bindemittel ermöglichen. Die Carbonsäuregruppe kann vor oder nach dem Einbau in das Bindemittel in die gewünschte β-Hydroxyalkylestergruppe bzw. β-Alkoxyalkylestergruppe überführt werden. Verbindungen, die diese Reaktionsmöglichkeiten besitzen, sind z. B. : Dihydroxymonocarbonsäuren wie 2,2-Bis-(hydroxymethyl)-propionsäure, 4,4(4,4'-Bis-hydroxyphenyl)-valeriansäure, 3,5-Dihydroxybenzoesäure, Di-hydroxydicarbonsäuren wie Weinsäure, 1,1-Methylenbis-(2-hydroxy-3-naphthoesäure) und Aminocarbonsäuren wie 11-Aminoundekansäure, 3-Aminopropionsäure, 4-Aminobenzoesäure.

Diese, die aktivierte Estergruppe enthaltende Verbindungen können über ihre reaktive Gruppen, insbesondere über Hydroxy- oder Aminogruppen, mit reaktiven Gruppen im Harzbindemittel umgesetzt werden. Das Harzbindemittel weist hierzu bevorzugt Epoxidgruppen auf.

Man stellt die Pigmentpasten nach der Erfindung her, indem man ein Pigment in dem Reibharz in gut bekannter Weise zerkleinert oder dispergiert. Die Pigmentpaste enthält als wesentliche Bestandteile das Reibharz mit den quaternären Ammoniumgruppen und mindestens ein Pigment. Außerdem können aber in der Pigmentzusammensetzung noch andere übliche Zusatzstoffe vorhanden sein, wie Weichmacher, Netzmittel, oberflächenaktive Mittel oder Entschäumer.

Die Anreibung der Pigmente erfolgt in der Regel in Kugelmühlen, Sandmühlen, Cowles-Mühlen und kontinuierlichen Mahlvorrichtungen, bis das Pigment auf die gewünschte Teilchengröße zerkleinert worden ist und bevorzugt durch das Harz benetzt bzw. darin dispergiert worden ist. Nach dem Zerkleinern sollte die Teilchengröße des Pigments im Bereich von 10 Mikron oder weniger liegen. Im allgemeinen wird auf eine Hegman-Feinheit von etwa 6 bis 8 zerkleinert.

Bevorzugt wird die Anreibung in einer wäßrigen Dispersion des Reibharzes durchgeführt. Die in der anzureibenden Masse anwesende Wassermenge sollte ausreichend sein, um eine kontinuierliche wäßrige Phase zu bilden.

Als Pigmente können bei der Erfindung die gut bekannten Pigmente benutzt werden. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, — Ton, Calciumcarbonat, Aluminiumsilicat, Siliciumdioxid, Magnesiumcarbonat und Magnesiumsilicat können aber auch verwendet werden. Als farbige Pigmente können beispielsweise Cadmiumgelb, Cadmiumrot, Ruß, Phthalocyaninblau, Chromgelb, Toluidinrot und hydratisiertes Eisenoxid benutzt werden. Wegen weiteren allgemeinen Hinweisen auf die Zerkleinerung von Pigmenten und die Formulierung von Anstrichmassen wird auf folgende Bücher verwiesen :

D. H. Parker, Principles of Surface Coating Technology, Interscience Publishers, New York (1965)
R. L. Yates, Electropainting, Robert Draper Ltd. Teddington, England (1966)
H. F. Payne, Organic Coating Technology, Band 2, Wiley and Sons, New York (1961).

Die Komplettierung der Pigmentpaste zum Elektrotauchlack erfolgt nun mit bekannten Bindemitteldispersionen oder wäßrigen Bindemittellösungen, die zum Beispiel in folgenden Patentschriften bzw. Offenlegungsschriften beschrieben werden DE-PS 2 701 002, EP 12 463 B1, EP 4090, DE-OS 3 103 642 oder DE-OS 3 215 891.

Bei der Komplettierung wird eine ausreichende Menge der erfindungsgemäßen Pigmentpaste eingesetzt, so daß das fertige, elektrisch abscheidbare Lackbad die für die Abscheidung erforderlichen Eigenschaften besitzt. In den meisten Fällen hat das Lackbad ein Verhältnis von Pigment zu Bindemittel (elektrisch abscheidbares Harz aus der Bindemitteldispersion oder Bindemittellösung und Reibharz in der Pigmentpaste) von 0,05 bis 0,5.

Das fertige elektrisch abscheidbare Lackbad kann zusätzlich zu der Pigmentpaste und dem elektrisch abscheidbaren Harz übliche Zusatzstoffe enthalten, wie Zusatzlösungsmittel, Antioxidantien, oberflächenaktive Mittel und andere typische Zusatzstoffe für die elektrische Abscheidung von Harzen.

Der Festkörper eines Abscheidebades, das mit der erfindungsgemäßen Pigmentpaste angesetzt ist, beträgt 7-35 Gew.-Teile, bevorzugt aber 12-25 Gew.-Teile. Der pH-Wert des Abscheidebades liegt zwischen 4 und 8, vorzugsweise aber zwischen 5 und 7,5. Als Anoden des Abscheidebades werden nicht korrodierte Stahlanoden oder Granitanoden verwendet. Die Temperatur des Badansatzes soll zwischen 15 bis 35 °C, bevorzugt zwischen 20 und 30° liegen. Die Abscheidedauer und -spannung werden so gewählt, daß die gewünschte Schichtstärke erreicht wird.

Nach der Abscheidung wird der beschichtete Gegenstand abgespült und ist zum Einbrennen bereit.

Unabhängig von dem Applikationsverfahren der auf Basis der erfindungsgemäßen Bindemittels hergestellten Überzugsmittel erfolgt die Vernetzung des Lackfilms während des Einbrennens bei Temperaturen von 130 bis 200 °C über eine Zeitdauer von 10-60 Minuten, bevorzugt bei 150 bis 180 °C während 15-30 Minuten.

Die Erfindung betrifft auch ein Verfahren zur Herstellung des Reibharzes nach Anspruch 1, insbesondere für Elektrotauchlacke, das dadurch gekennzeichnet, ist, daß ein Polyglycidylester oder -ether mit einer Verbindung, die gegenüber Epoxidgruppen reaktive Gruppen und mindestens eine in der Alkoholkomponente durch einen Substituenten, der einen negativen induktiven Effekt bewirkt, aktivierte Carboxylestergruppe trägt, zu einem Zwischenprodukt mit Epoxidgruppen umgesetzt wird und diese Epoxidgruppen unter Ringöffnung mit einem Amin-Säure-Addukt umgesetzt werden, sodaß das Kunstharz 0,8 bis 2,0 quartäre Ammoniumgruppen pro Molekül enthält.

Die Erfindung betrifft weiterhin die Verwendung der Reibharze zur Herstellung von Elektrotauchbädern für das Elektrotauchlackierverfahren.

Die Erfindung betrifft ferner ein Verfahren zum Herstellen von Überzügen, bei dem ein elektrisch leitendes Substrat in ein wäßriges Elektrotauchbad, das Reibharz auf der Basis eines quartäre Stickstoffgruppen und veresterte Carboxylgruppen enthaltenden organischen Kunstharzes enthält, eingetaucht und als Kathode geschaltet wird, durch Gleichstrom ein Film auf dem Substrat abgeschieden wird, das Substrat aus dem Bad entfernt wird und der Film durch Einbrennen zu einem Überzug gehärtet wird, dadurch gekennzeichnet, daß die veresterten Carboxylgruppen des Kunstharzes in der Alkoholkomponente durch einen Substituenten, der einen negativen induktiven Effekt bewirkt aktiviert sind und beim Einbrennen mit Hydroxylgruppen und gegebenenfalls Aminogruppen umgesetzt werden.

Die Erfindung betrifft schließlich auch ein mit einem Überzug versehenes Substrat, das nach dem beschriebenen Verfahren hergestellt worden ist.

Im folgenden wird die Erfindung anhand von Beispielen näher erläutert.

## Beispiele

### Vorprodukt 1

Darstellung von 4,4-(4,4'-Dihydroxydiphenyl)-pentansäure-2-hydroxy-3-(1-oxo-2-methyl-2-ethylheptoxy)-propylester

In einem 10 l Reaktionsgefäß mit Rückflußkühler, Rührer und Innenthermometer werden 3 810 g 4,4-(4,4'-Dihydroxydiphenyl)-pentansäure, 3 855 g 2-Methyl-2-ethylheptansäureglycidylester und 1 897 g Cyclohexanon vorgelegt. Hierzu werden 19 g eines Cr-haltigen Katalysators zugegeben. Der Reaktionsansatz wird auf 90 °C erhitzt und bei dieser Temperatur gehalten bis die Säurezahl auf 1 abgefallen ist und der Epoxidgehalt 0,3 % ist. Der Festkörper liegt bei 80 % (4,4'-Dihydroxydiphenyl)-pentansäure-2-hydroxy-3-(1-oxo-2-methyl-2-ethyl-heptoxy)propylester.

### Vorprodukt 2

Darstellung von 2,2-Bis-(hydroxymethyl)-propionsäure-2-ethoxyethylester

In einem geeignet ausgerüsteten 5 l Reaktor werden 3 225 g Ethylglykol 960 g 2,2-Bis(hydroxymethyl-propionsäure und 215 g Xylol vorgelegt und mit 36 g sauren Ionenaustauscher versetzt. Der Reaktionsansatz wird zum Sieden gebracht und das entstehende Wasser wird dabei azeotrop ausgekreist. Sobald kein Wasser mehr übergeht, destilliert man 500 g Xylol-Ethylglykolgemisch ab. Danach wird der Ionenaustauscher abfiltriert und das überschüssige Ethylglykol sowie die Reste des Xylols im Vakuum abgezogen.

Darstellung des Reibharzes 1

In einem 5 l Reaktor werden 1 172 g Epoxidharz auf Basis Bisphenol A (Epoxidäquivalentgewicht 188) und 1 068 g Vorprodukt 1 vorgelegt. Das Produkt wird erhitzt und 30 Minuten bei 165 °C gehalten. Danach kühlt man auf 110 °C ab und gibt 1 454 g Butylglykol zu. Man stellt die Temperatur auf 80 °C ein und gibt 460 g eines Umsetzungsprodukts aus Methyldiethanolamin und 88 %iger wäßriger Milchsäure (1 zu 1,005 Mol) zu. Man hält die Temperatur bis die Säurezahl 1,0 ist. Danach stellt man den Festkörper mit 346 g Butylglykol ein (60 %).

Darstellung des Reibharzes 2

In einem 5 l Reaktor werden 1 583 g Epoxidharz auf Basis Bisphenol A (Epoxidäquivalentgewicht 188) und 650 g Vorprodukt 2 vorgelegt. Der Ansatz wird auf 125 °C erhitzt. Dann gibt man 8 g Dimethylbenzylamin zu und hält nach der exothermen Reaktion die Temperatur bei 130 °C bis ein Epoxidäquivalentgewicht von 1 035 erreicht ist. Danach kühlt man rasch auf 110 °C ab und gibt 1 454 g Butylglykol zu. Man stellt die Temperatur auf 80 °C ein und fügt dann 466 g des Umsetzungsprodukts aus Methyldiethanolamin und 88 %iger wäßriger Milchsäure (1 zu 1,005 Mol) zu. Man hält die Temperatur bei 80 °C bis die Säurezahl kleiner 1 ist. Danach wird der Festkörper mit 347 g Butylglykol eingestellt (60 %).

Zubereitung der Pigmentpasten

1 800 Teilen des Reibharzes werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird nun in einer Kugelmühle auf eine Hegman-Feinheit von 5-7 zerkleinert. Danach gibt man 1 255 Teile entionisiertes Wasser zu, um die gewünschte Pastenkonsistenz zu erreichen.

Beide Reibharze werden in derselben Weise zu Pigmentpasten verarbeitet.

Reibharz 1 = Pigmentpaste 1
Reibharz 2 = Pigmentpaste 2

Darstellung einer Bindemitteldispersion

a) Vernetzungsmittel

4 272 g eines Umsetzungsproduktes aus Pentaerythrit und Caprolacton (1 : 4 Molen) werden in einem geeignet ausgerüsteten 20 l Reaktor mit 5 304 g Trimellithsäureanhydrid vorgelegt und auf 160 °C erhitzt. Sobald eine Säurezahl von 338 erreicht ist, kühl man ab und beginnt bei 146 °C langsam mit dem Zulauf von 2 000 g Methylisobutylketon (MIBK). Hierdurch sinkt die Temperatur weiter ab. Dann gibt man bei 109 °C 124 g eines Katalysators auf Chromsalzbasis zu und verdünnt mit 3 000 g MIBK weiter. Man hält dann 95 °C Temperatur und beginnt mit dem Zulauf von Butylenoxid. Man gibt so lange Butylenoxid nach bis die Säurezahl unter 2 gefallen ist.

Kennwerte :

Festkörper : 74,4 % (130 °C, 60 min)
Säurezahl : 1,86

b) Bindemittel

In einem geeignet ausgerüsteten 5 l Reaktor werden 1 360 g eines handelsüblichen Epoxidharzes auf Basis Bisphenol A (EEW 188), 301 g 2,2-Dimethyl-1,3-propandiol und 83 g Xylol vorgelegt und erhitzt. Bei 123 °C fügt man 11 g Dimethylbenzylamin zu. Nach der exothermen Reaktion hält man die Temperatur auf 135 °C bis ein Epoxidäquivalentgewicht von 1 110 erreicht ist. Dann kühlt man auf 9 °C ab und fügt eine Mischung aus 121 g Diethanolamin und 106 g Diethylentriaminbismethylisobutylketimin, 72 %ig in Methylisobutylketon, zu. Nach Ende der exothermen Reaktion hält man den Ansatz 1 Stunde bei 115 °C. Dann mischt man 162 g Propylenglykolmonophenylether, 72 g Bleioctoat und 744 g des Vernetzungsmittels 1 unter. Inzwischen wird ein Dispergierbad aus 2 410 g entionisiertem Wasser, 43 g

Eisessig und 48 g einer Emulgatorlösung vorbereitet. Die Säurezahl dieses Bades beträgt 16,6. Darin wird das Harz dispergiert. Nach einer Stunde fügt man weitere 1 539 g entionisiertes Wasser zu.

Unter vermindertem Druck erwärmt man nun die Dispersion auf 50 °C und trennt dabei 250 g organische Phase durch Auskreisen ab. Danach hebt man das Vakuum auf und filtriert die Dispersion.

Kenndaten der Dispersion 3

Festkörper : 35,5 % (30 min, 150 °C)
pH-Wert : 6,8
MEQ-Säure : 0,315
MEQ-Base : 0,668

Diese Bindemitteldispersion eignet sich sehr gut zur Prüfung der Pigmentpasten.

Zubereitung der Elektrotauchbäder

Aus der obenbeschriebenen Bindemitteldispersion werden mit den obenbeschriebenen, grauen Pigmentpasten Lackbäder angesetzt.

Hierzu werden verwendet:

2 280 Teile entionisiertes Wasser
25 Teile 10 %ige Essigsäure
1 920 Teile Bindemitteldispersion
775 Teile Pigmentpaste

Die Abscheidung der Lackfilme erfolgt bei 26 °C Badtemperatur während 120 Sekunden. Hierzu werden zinkphosphatierte Bleche als Kathode geschaltet und beschichtet. Die Härtung der abgeschiedenen Filme erfolgt während 20 Minuten bei 185 °C im Umlufttrockenofen.

Ergebnisse der Abscheidungen

Die Ergebnisse der Abscheidung sind in den folgenden Tabellen zusammengefaßt.

Abscheidedaten

| Pigmentpaste | 1 | 2 |
|---|---|---|
| Abscheidespannung | 310 | 290 |
| Filmdicke (µm) | 18 | 19 |

Mechanisch-technologische Kenndaten

| Pigmentpaste | 1 | 2 |
|---|---|---|
| Erichsentiefung (mm) | 6,7 | 6,3 |
| Gitterschnitt * | 0 | 0 |
| Biegeprobe | i.O. | i.O. |
| Impact (inch-pound) | 50 | 40 |

*) 0 = bester Wert, 5 = schlechtester Wert.

**Patentansprüche**

1. Selbstvernetzendes, hitzehärtbares Bindemittel insbesondere für Elektrotauchlacke auf der Basis eines organischen Kunstharzes, das primäre und/oder sekundäre Hydroxylgruppen, veresterte Carboxylgruppen und gegebenenfalls Aminogruppen enthält, dadurch gekennzeichnet, daß das Kunstharz 0,8 bis 2,0 quartäre Ammoniumgruppen pro Molekül enthält und die veresterten Carboxylgruppen in der Alkoholkomponente durch einen Substituenten aktiviert sind, der einen negativen induktiven Effekt bewirkt.

2. Bindemittel nach Anspruch 1, dadurch gekennzeichnet, daß die veresterten Carboxylgruppen β-Hydroxyalkylestergruppen sind.

3. Bindemittel nach Anspruch 1, dadurch gekennzeichnet, daß die veresterten Carboxylgruppen β-Alkoxyalkylestergruppen sind.

4. Bindemittel nach Anspruch 1 bis 3, dadurch gekennzeichnet, daß das Kunstharz 2 bis 10 primäre und/oder sekundäre Hydroxylgruppen und 1 bis 5 aktivierte Estergruppen pro 1 000 Molekulargewichtseinheiten enthält.

5. Bindemittel nach Anspruch 1 bis 4, dadurch gekennzeichnet, daß das Äquivalentverhältnis zwischen den primären und/oder sekundären Hydroxylgruppen und den aktivierten Carboxylestergruppen 4 : 1 bis 1 : 2 beträgt.

6. Bindemittel nach Anspruch 1 bis 5, dadurch gekennzeichnet, daß das Kunstharz ein Epoxidharz ist, das hergestellt worden ist durch Umsetzung eines Polyglycidylesters oder -ethers mit einer Verbindung, die zwei gegenüber Epoxidgruppen reaktive Gruppen und mindestens eine aktivierte Carboxylestergruppe trägt, zu einem Zwischenprodukt mit endständigen Epoxidgruppen und Umsetzung dieser Epoxidgruppen unter Ringöffnung mit einem Salz eines tertiären Amins.

7. Verfahren zur Herstellung des Bindemittels insbesondere für Elektrotauchlacke gemäß Anspruch 1, dadurch gekennzeichnet, daß ein Polyglycidylester oder -ether mit einer Verbindung, die zwei gegenüber Epoxidgruppen reaktive Gruppen und mindestens eine in der Alkoholkomponente durch einen Substituenten, der einen negativen induktiven Effekt bewirkt, aktivierte Carboxylestergruppe trägt, zu einem Zwischenprodukt mit endständigen Epoxidgruppen umgesetzt wird und diese Epoxidgruppen unter Ringöffnung mit einem Salz eines tertiären Amins umgesetzt werden, sodaß das Kunstharz 0,8 bis 2,0 quartäre Ammoniumgruppen pro Molekül enthält.

8. Verfahren nach Anspruch 7, dadurch gekennzeichnet, daß eine Verbindung mit mindestens einer β-Hydroxyalkylestergruppe verwendet wird.

9. Verfahren nach Anspruch 7, dadurch gekennzeichnet, daß eine Verbindung mit einer β-Alkoxyalkylestergruppe verwendet wird.

10. Verfahren nach Anspruch 7 bis 9, dadurch gekennzeichnet, daß die Molverhältnisse der verwendeten Ausgangsstoffe so gewählt werden, daß ein Bindemittel mit 2 bis 10 primären und/oder sekundären Hydroxylestergruppen pro 1 000 Molekulargewichtseinheiten erhalten wird.

11. Verfahren nach Anspruch 7 bis 10, dadurch gekennzeichnet, daß die Molverhältnisse der Ausgangsstoffe so gewählt werden, daß ein Bindemittel mit einem Äquivalenzverhältnis zwischen den primären und/oder sekundären Hydroxylgruppen und den aktivierten Carboxylestergruppen von 4 : 1 bis 1 : 2 erhalten wird.

12. Verwendung der Bindemittel nach Anspruch 1 bis 6 als Reibharze bei der Herstellung von Elektrotauchbädern für das Elektrotauchlackierverfahren.

13. Verfahren zum Herstellen von Überzügen, bei dem ein elektrisch leitendes Substrat in ein wäßriges Elektrotauchbad, das ein mindestens teilweise durch Säure neutralisiertes Bindemittel auf der Basis eines primäre und/oder sekundäre Hydroxylgruppen und veresterte Carboxylgruppen enthaltenden organischen Kunstharzes enthält, eingetaucht und als Kathode geschaltet wird, durch Gleichstrom ein Film auf dem Substrat abgeschieden wird, das Substrat aus dem Bad entfernt wird und der Film durch Einbrennen zu einem Überzug gehärtet wird, dadurch gekennzeichnet, daß das Kunstharz 0,8 bis 2,0 quartäre Ammoniumgruppen pro Molekül enthält und die veresterten Carboxylgruppen in der Alkoholkomponente durch einen Substituenten aktiviert sind, der einen negativen induktiven Effekt bewirkt.

14. Verfahren nach Anspruch 13, dadurch gekennzeichnet, daß ein Bindemittel auf der Basis eines organischen Kunstharzes verwendet wird, dessen aktivierte Carboxylestergruppen β-Hydroxyalkylestergruppen sind.

15. Verfahren nach Anspruch 13, dadurch gekennzeichnet, daß ein Bindemittel auf der Basis eines organischen Kunstharzes verwendet wird, dessen aktivierte Carboxylestergruppen β-Alcoxyalkylestergruppen sind.

16. Verfahren nach Anspruch 12 bis 15, dadurch gekennzeichnet, daß als Bindemittel ein Kunstharz verwendet wird, das 2 bis 10 primäre und/oder sekundäre Hydroxylgruppen und 1 bis 5 aktivierte Estergruppen pro 1 000 Molekulargewichtseinheiten enthält.

17. Verfahren nach Anspruch 13 bis 16, dadurch gekennzeichnet, daß als Bindemittel ein Kunstharz verwendet wird, das ein Äquivalentverhältnis zwischen den primären und/oder sekundären Hydroxylgruppen und den aktivierten Carboxylestergruppen von 4 : 1 bis 1 : 2 aufweist.

18. Verfahren nach Anspruch 13 bis 17, dadurch gekennzeichnet, daß als Bindemittel ein Kunstharz verwendet wird, das hergestellt worden ist durch Umsetzung eines Polyglycidylesters oder -ethers mit einer Verbindung, die zwei gegenüber Epoxidgruppen reaktive Gruppen und mindestens eine aktivierte Carboxylestergruppe trägt, zu einem Zwischenprodukt mit endständigen Epoxidgruppen und Umsetzung dieser Epoxidgruppen unter Ringöffnung mit einem Salz eines tertiären Amins.

19. Mit einem Überzug versehenes Substrat, hergestellt durch das Verfahren nach Anspruch 13 bis 18.

**Claims**

1. A self-crosslinking, heat-curable binder, in particular for electrocoating finishes, based on an organic synthetic resin which contains primary and/or secondary hydroxyl groups and esterified carboxyl groups and may contain amino groups, wherein the synthetic resin contains 0.8 to 2.0 quaternary ammonium groups per molecule, and the esterified carboxyl groups are activated in the alcohol component by a substituent which has a negative inductive effect.

2. A binder as claimed in claim 1, wherein the esterified carboxyl groups are β-hydroxyalkyl ester groups.

3. A binder as claimed in claim 1, wherein the esterified carboxyl groups are β-alkoxyalkyl ester groups.

4. A binder as claimed in claims 1 to 3, wherein the synthetic resin contains 2 to 10 primary and/or secondary hydroxyl groups and 1 to 5 activated ester groups per 1,000 molecular weight units.

5. A binder as claimed in claims 1 to 4, wherein the ratio of the number of equivalents of primary and/or secondary hydroxyl groups to that of activated carboxylic ester groups is 4 : 1 to 1 : 2.

6. A binder as claimed in claims 1 to 5, wherein the synthetic resin is an epoxy resin which is prepared by reacting a polyglycidyl ester or ether with a compound which carries two groups which are reactive toward epoxide groups and at least one activated carboxylic ester group to give an intermediate possessing terminal epoxide groups, and reacting these epoxide groups with a salt of a tertiary amine, ring-opening taking place.

7. A process for the preparation of the binder, in particular for electrocoating finishes as claimed in claim 1, wherein a polyglycidyl ester or ether is reacted with a compound which carries two groups which are reactive toward epoxide groups and at least one carboxylic ester group which is activated in the alcohol component by a substituent which has a negative inductive effect to give an intermediate possessing terminal epoxide groups, and these epoxide groups are reacted with a salt of a tertiary amine, ring-opening taking place, so that the synthetic resin contains 0,8 to 2,0 quaternary ammonium groups per molecule.

8. A process as claimed in claim 7, wherein a compound possessing at least one β-hydroxyalkyl ester group is used.

9. A process as claimed in claim 7, wherein a compound possessing a β-alkoxyalkyl ester group is used.

10. A process as claimed in claims 7 to 9, wherein the molar ratios of the starting materials used are chosen so that a binder containing 2 to 10 primary and/or secondary hydroxyl groups per 1,000 molecular weight units is obtained.

11. A process as claimed in claims 7 to 10, wherein the molar ratios of the starting materials are chosen so that, in the binder obtained, the ratio of the number of equivalents of primary and/or secondary hydroxyl groups to that of activated carboxylic ester groups is from 4 : 1 to 1 : 2.

12. Use of a binder as claimed in claims 1 to 6 as a grinding resin in the preparation of electrocoating baths for the electrocoating process.

13. A process for the production of coatings, in which an electrically conductive substrate is immersed in an aqueous electrocoating bath which contains a binder which is at least partially neutralized with an acid and is based on an organic synthetic resin containing primary and/or secondary hydroxyl groups and esterified carboxyl groups, and is made the cathode, a film is deposited onto the substrate by means of direct current, the substrate is removed from the bath, and the film is hardened by baking to give a coating, wherein the synthetic resin contains 0.8 to 2.0 quaternary ammonium groups per molecule, and the esterified carboxyl groups are activated in the alcohol component by a substituent which has a negative inductive effect.

14. A process as claimed in claim 13, wherein the binder used is based on an organic synthetic resin whose activated carboxylic ester groups are β-hydroxyalkyl ester groups.

15. A process as claimed in claim 13, wherein the binder used is based on an organic synthetic resin whose activated carboxylic ester groups are β-alkoxyalkyl ester groups.

16. A process as claimed in claims 12 to 15, wherein the binder used is a synthetic resin which contains 2 to 10 primary and/or secondary hydroxyl groups and 1 to 5 activated ester groups per 1,000 molecular weight units.

17. A process as claimed in claims 13 to 16, wherein the binder used is a synthetic resin in which the ratio of the number of equivalents of primary and/or secondary hydroxyl groups to that of activated carboxylic ester groups is from 4 : 1 to 1 : 2.

18. A process as claimed in claims 13 to 17, wherein the binder used is a synthetic resin which is prepared by reacting a polyglycidyl ester or ether with a compound which carries two groups which are reactive toward epoxide groups and at least one activated carboxylic ester group to give an intermediate possessing terminal epoxide groups, and reacting these epoxide groups with a salt of a tertiary amine, ring-opening taking place.

19. A coated substrate produced by a process as claimed in claims 13 to 18.

**Revendications**

1. Liant autoréticulant thermodurcissable, en particulier pour peintures d'électrophorèse, à base

d'une résine synthétique organique qui contient des groupes hydroxyle primaires et secondaires, des groupes carboxyle estérifiés et éventuellement des groupes amine, caractérisé par le fait que la résine synthétique contient 0,8 à 2,0 groupes ammonium quaternaire par molécule et que les groupes carboxyle estérifiés sont activés dans le constituant alcool par un substituant qui provoque un effet inductif négatif.

2. Liant selon la revendication 1, caractérisé par le fait que les groupes carboxyle estérifiés sont des groupes ester de β-hydroxyalkyle.

3. Liant selon la revendication 1, caractérisé par le fait que les groupes carboxyle estérifiés sont des groupes ester de β-alcoxyalkyle.

4. Liant selon les revendications 1 à 3, caractérisé par le fait que la résine synthétique contient 2 à 10 groupes hydroxyle primaires et/ou secondaires et 1 à 5 groupes ester activés par 1 000 unités de poids moléculaire.

5. Liant selon les revendications 1 à 4, caractérisé par le fait que le rapport d'équivalence entre les groupes hydroxyle primaires et/ou secondaires et les groupes ester carboxylique activés est de 4 : 1 à 1 : 2.

6. Liant selon les revendications 1 à 5, caractérisé par le fait que la résine synthétique est une résine d'époxyde qui a été préparée par réaction d'un ester ou éther de polyglycidyle sur un composé qui porte deux groupes réactifs vis-à-vis des groupes époxyde et au moins un groupe ester carboxylique activé, donnant un produit intermédiaire à groupes époxyde terminaux, et réaction de ces groupes époxyde, avec décyclisation, sur un sel d'une amine tertiaire.

7. Procédé de préparation du liant en particulier pour peintures d'électrophorèse selon la revendication 1, caractérisé par le fait que l'on fait réagir un ester ou éther de polyglycidyle sur un composé qui porte deux groupes réactifs vis-à-vis des groupes époxyde et au moins un groupe ester carboxylique activé dans le constituant alcool par un substituant qui provoque un effet inductif négatif, donnant un produit intermédiaire à groupes époxyde terminaux, et que l'on fait réagir ces groupes époxyde, avec décyclisation, sur un sel d'une amine tertiaire de sorte que la résine synthétique contient 0,8 à 2,0 groupes ammonium quaternaire par molécule.

8. Procédé selon la revendication 7, caractérisé par le fait que l'on utilise un composé contenant au moins un groupe ester de β-hydroxyalkyle.

9. Procédé selon la revendication 7, caractérisé par le fait que l'on utilise un composé contenant un groupe ester de β-alcoxyalkyle.

10. Procédé selon les revendications 7 à 9, caractérisé par le fait que l'on choisit les rapport molaires des matières premières utilisées de façon telle que l'on obtienne un liant contenant 2 à 10 groupes hydroxyle primaires et/ou secondaires par 1 000 unités de poids moléculaire.

11. Procédé selon les revendications 7 à 10, caractérisé par le fait que l'on choisit les rapports molaires des matières premières de façon telle que l'on obtienne un liant ayant un rapport d'équivalence entre les groupes hydroxyle primaires et/ou secondaires et les groupes ester carboxylique activés de 4 : 1 à 1 : 2.

12. Utilisation des liants selon les revendications 1 à 6 comme résines de frottement lors de la préparation de bains d'électrophorèse pour le procédé de peinturage par électrophorèse.

13. Procédé de réalisation de revêtements dans lequel on plonge un subjectile conducteur de l'électricité dans un bain aqueux d'électrophorèse qui contient un liant au moins partiellement neutralisé par de l'acide, à base d'une résine synthétique organique contenant des groupes hydroxyle primaires et/ou secondaires et des groupes carboxyle estérifiés et on le branche comme cathode, par du courant continu, on dépose un feuil sur le subjectile, on retire le subjectile du bain et par cuisson, on durcit le feuil en un revêtement, caractérisé par le fait que la résine synthétique contient 0,8 à 2,0 groupes ammonium quaternaire par molécule et que les groupes carboxyle estérifiés sont activés dans le constituant alcool par un substituant qui provoque un effet inductif négatif.

14. Procédé selon la revendication 13, caractérisé par le fait que l'on utilise un liant à base d'une résine synthétique organique dont les groupes ester carboxylique activés sont des groupes ester de β-hydroxyalkyle.

15. Procédé selon la revendication 13, caractérisé par le fait que l'on utilise un liant à base d'une résine synthétique organique dont les groupes ester carboxylique activés sont des groupes ester de β-alcoxyalkyle.

16. Procédé selon les revendications 12 à 15, caractérisé par le fait que l'on utilise comme liant une résine synthétique qui contient 2 à 10 groupes hydroxyle primaires et/ou secondaires et 1 à 5 groupes ester activés par 1 000 unités de poids moléculaire.

17. Procédé selon les revendications 13 à 16, caractérisé par le fait que l'on utilise comme liant une résine synthétique qui présente un rapport d'équivalence, entre les groupes hydroxyle primaires et/ou secondaires et les groupes ester carboxylique activés de 4 : 1 à 1 : 2.

18. Procédé selon les revendications 13 à 17, caractérisé par le fait que l'on utilise comme liant une résine synthétique qui a été préparée par réaction d'un ester ou éther de polyglycidyle sur un composé qui porte deux groupes réactifs vis-à-vis des groupes époxyde et au moins un groupe ester carboxylique activé, donnant un produit intermédiaire à groupe époxyde terminaux, et réaction de ces groupes époxyde, avec décyclisation, sur un sel d'une amine tertiaire.

19. Subjectile muni d'un revêtement, préparé par le procédé selon les revendications 13 à 18.